# EUROPEAN PATENT SPECIFICATION

(11) **EP 2 389 134 B1**
(45) Date of publication and mention of the grant of the patent: **01.08.2018**
(21) Application number: 10704238.4
(22) Date of filing: 25.01.2010
(51) Int. Cl.: A61C 5/80, A61C 5/85

(54) **DENTAL SEPARATOR FOR PRODUCING DENTAL RESTORATIONS**
DENTALSEPARATOR ZUR HERSTELLUNG VON ZAHNRESTAURATIONEN
SÉPARATEUR DENTAIRE POUR PRODUIRE DES RESTAURATIONS DENTAIRES

(30) Priority: 23.01.2009 US 205796 P
(43) Date of publication of application: 30.11.2011
(73) Proprietor: DENTSPLY SIRONA Inc., York, PA 17401-2991 (US)
(72) Inventor: PIERONI, Robert, J., Milford DE 19963 (US); COSTE, Andrew, J., Swarthmore PA 19081 (US)
(74) Representative: Hartz, Nikolai
(86) International application number: PCT/US2010/000203
(87) International publication number: WO 2010/085364

(56) References cited:
- WO-A1-2004/004591
- FR-A1- 2 820 024
- US-A- 4 601 662
- US-A- 5 607 302
- US-B1- 6 325 625

## Description

### Background of the Invention

The present invention relates generally to a dental separator device for applying pressure against adjacent teeth to separate the teeth from one another so that a dental restoration can be made. The separator device increases the interproximal space between the adjacent teeth giving the dental clinician improved visibility and working space.

Dental clinicians use dental restorations to restore or replace lost tooth structure, teeth, or oral tissue. Dental restorations include, for example, fillings, inlays, onlays, veneers, crowns, and the like. For example, a dental clinician will use a composite resin or amalgam to "fill" a cavity and restore the structure of the tooth. When a cavity occurs in an interproximal area between two abutting teeth, thin bands of metal or plastic material, commonly known as matrices, are wrapped around the teeth. These matrix bands are particularly effective when making dental restorations in the posterior region of the mouth. The matrix provides a temporary mold or form for holding the composite resin or other material used to fill the cavity. The shape of the matrix bands allows the natural contours of the decayed tooth to be rebuilt. The matrix band forms a mold or shell for receiving the flowable restorative material and retains the material therein to provide a desired shape and structure. The matrix band holds the flowable restorative material in a steady state so that it can be cured and hardened to form the finished restoration. Such restorative materials are well known in the dental industry and the the compositions can be self-curable, light-curable, or dual-curable. The materials are cured by different chemical mechanisms to form a strong and durable restoration.

To properly position the matrix bands, the abutting teeth must be gently forced apart temporarily. Sufficient space for the matrix must be created so the matrix can be positioned and stabilized. Dental instruments, commonly referred to as dental separators and/or wedges of plastic or wood material, are used to separate the abutting teeth.

One dental separator and matrix product known in the dental industry is the Palodent® system, available from Dentsply International (Caulk Division, Milford, DE). The system includes a BiTine® ring to provide gentle separation of abutting teeth and matrix stabilization. The adjustable spring action of the BiTine ring forces the adjacent teeth apart while the cavity in the interproximal or interdental area is being prepared. Then, the BiTine ring is removed and an appropriate contoured sectional matrix band is selected. The matrix band is malleable so that it can be finger rolled to match the approximate dimension of the tooth structure. The matrix band is placed in position and the gingival margin can be gently closed using a plastic anatomical wedge. The matrix band should be further stabilized so that the dental clinician can work with the matrix without dislodging it. To further stabilize the matrix, a BiTine ring is placed in position so that the angled tines extend into the proximal plane of the teeth, and the yoke is generally parallel to the occlusal plane of the patient. The matrix can be slightly burnished to protect the margins of the teeth and generate proper anatomy. The damaged tooth is now ready to be restored.

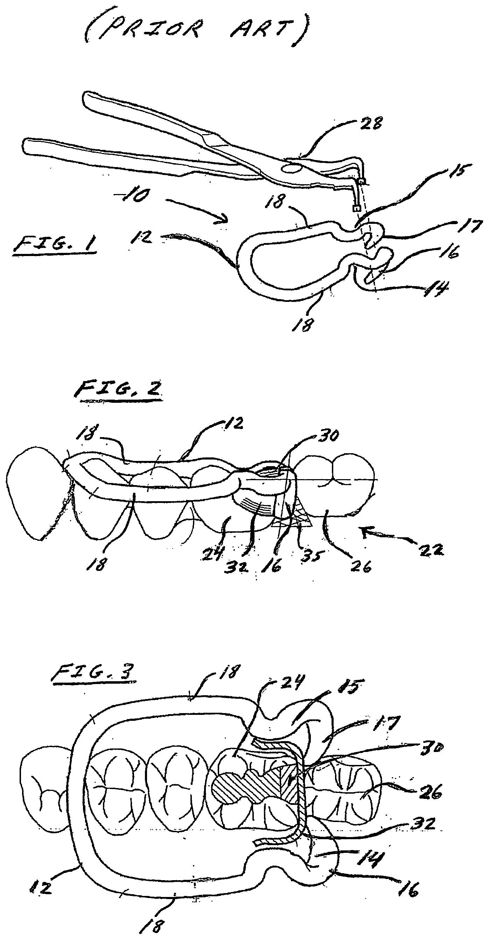

Dental separators and matrix stabilizing instruments are generally known in the art as described in Meyer, U.S. Patent 6,325,625. Referring to **FIG. 1****,** a traditional dental separator (10) instrument is shown. The separator (10) includes a yoke (12), a pair of engagement structures (14), and a pair of opposing tines (16, 17). The yoke (12) includes a pair of longitudinal segments (18) and has a U-shaped structure. An engagement structure or receptacle (14) is located at one end of each longitudinal segment (18). In practice, a dental clinician will position the dental separator (10) on a patient's dental arch (22) such that the tines (16, 17) are adjacent to the interdental (interproximal) surfaces of the tooth that will be restored (24) and an abutting tooth (26) (**FIG. 2**). The clinician will grasp the dental separator (10) with spreading forceps (28) and squeeze the forceps to sufficiently open the tines (16, 17) enough to clear the width of the involved teeth (24, 26). Once the clinician releases pressure on forceps (28), the spring biasing force of the yoke (12) causes the opposing tines (16, 17) to move toward each other. This provides a wedging effect on the interdental surfaces of the involved teeth (24, 26). The force exerted on the interdental surfaces of the involved teeth (24, 26) causes the teeth to move apart.

Referring to **FIGS. 2 and 3****,** the dental clinician is now ready to restore the damaged tooth (24) using a restorative material such as a composite resin or amalgam. The clinician will first "drill" the tooth (24) to remove decay from the targeted area. The dental separator (10) is kept in place while the cavity or void (30) is being prepared. As discussed above, the separator (10) gently separates the involved teeth (24, 26) so the clinician has improved visibility and working space. The clinician will use a temporary form or matrix (32) to occlude the tooth cavity (30) in the interdental area. Different matrix bands are known in the art. For example, Bills, U.S. Patent 6,712,608 discloses an asymmetrically shaped matrix band. The matrix band comprises a cross-sectional area that curves asymmetrically in the vertical direction. The top and bottom portions of the curved matrix have different radius of curvatures.

In **FIGS. 2 and 3****,** the matrix (32) creates a temporary mold or shell in the tooth that will be restored (24). The matrix (32) should be stabilized against the tooth (24) to prevent the matrix from becoming dislodged. In practice, a dental clinician first positions the matrix (32) between the interdental surfaces of the involved teeth (24, 26). Then, an anatomical wedge (35) is placed in the gingival margin - this helps enlarge the gap between opposing tines (16, 17) of the dental separator (10). The opposing tines (16, 17) are positioned in such a manner so they contact the free ends of the matrix (32). This helps to stabilize the matrix (32) against the tooth (24). The opposing tines (16, 17) help keep the matrix (32) in position around the tooth (24). The damaged tooth (24) can now be restored by applying the restorative material. The cavity or void (30), which is occluded by the matrix (32), is filled with the flowable restorative material.

FR 2 820 024 A1 discloses a dental spacing ring. US 5,607,302 discloses a matrix retainer.

Conventional dental separators and matrix systems are generally effective; however, there is a need for an improved system. Particularly, there is a need in the dental field for an improved dental separator device that will provide better control of contact areas and embrasures, ease of placement, better visualization of the operative field, and more comfort for the dental practitioner and patient. The present invention provides such a dental separator having these objects, features, and advantages as well as others.

### Summary of the Invention

The present invention relates to the subject matter of claims **1**.

### Dental Separator Device

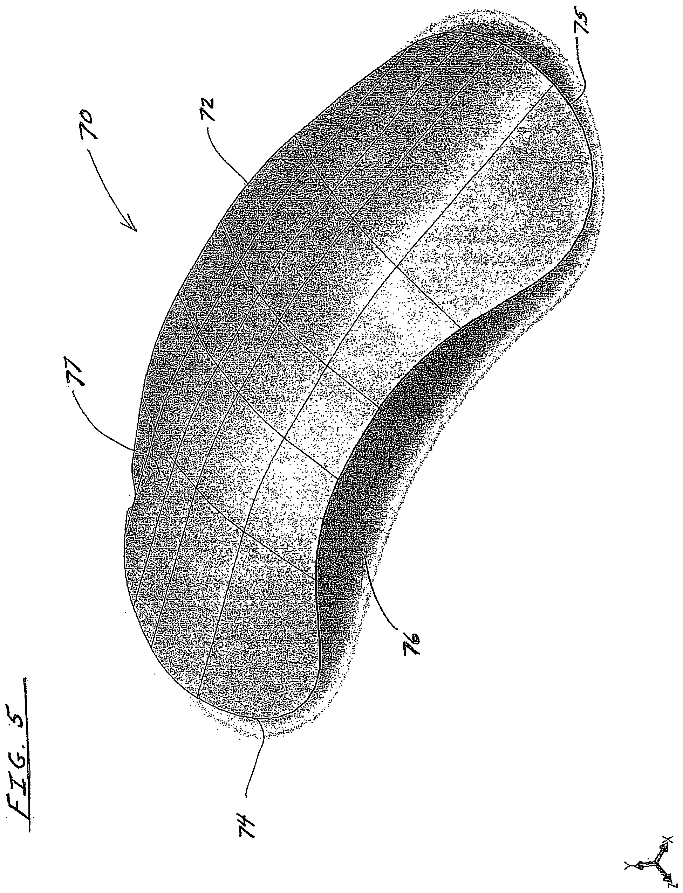

Referring to **FIG. 4****,** one embodiment of the dental separator device of the present invention is generally shown. The dental separator or open ring (40) comprises a spring-tensioned yoke (42) including two opposing partial elliptical segments (44, 46) joined by a connector segment (48). The yoke (42) is a unitary, one-piece structure. Engagement structures (50, 52) are located at each end of the elliptical segments (44, 46), respectively. Opposing tines (54, 56) extend downwardly from the engagement structures (50, 52). The tines (54, 56) extend downwardly at acute angles and are configured so they converge toward one another. Preferably, the tines (54, 56) extend from the engagement structures (50, 52) at an angle in the range of 70 to 90 degrees with respect to the yoke plane. That is, the opposing tines (54, 56) do not extend in parallel to each other. Each tine (54, 56) includes an interior surface (58) and exterior surface (60). The dental separator (40) is made of a firm and resilient material such as stainless steel or plastic, and it has a rectangular cross-sectional shape.

Gripping members (62, 64) are attached to the tines (54, 56). The gripping members (62, 64) preferably have tubular shapes and can be referred to as compressions sleeves. The tubular gripping members (62, 64) can be fitted over the tines (54, 56) and held in place by a tight interference fit. Alternatively, the tubular gripping members (62, 64) can be held in place by a suitable adhesive. The gripping members (62, 64) are preferably made of a soft medical grade material such as silicone rubber, polyvinyl chloride, or other elastomeric material that provides a firm yet cushioned grip. The gripping members (62, 64) help in positioning and manipulating the tine (54, 56) on the dental arch of a patient.

The dental separator (40) can be used to in a patient's mouth to enlarge the space between abutting teeth and stabilize a matrix band so that a dental restoration can be made. In order for a matrix band to be effective, there must be enough interdental space between adjacent teeth so the matrix can remain in position without being deformed or distorted. The dental separator (40) is particularly suitable for use with the matrix bands described further below.

In practice, the clinician will grasp the dental separator (40) with spreading forceps and squeeze the forceps to sufficiently open the tines (54, 56) enough to clear the width of the abutting teeth. Once the clinician releases pressure on forceps, the spring biasing force of the yoke (42) causes the opposing tines (54, 56) to move toward each other. This provides a wedging effect on the interdental surfaces of the abutting teeth. The angled, forward-extending tines (54, 56) are able to hug and cradle the abutting teeth. The force exerted on the interdental surfaces of the abutting teeth causes the teeth to move apart.

The first and second opposing tines (54, 56) with compression sleeves (62, 64) are adapted for wedging between and against the surfaces of adjacent teeth. This force on the teeth causes the teeth to move apart while the cavity or void in the damaged tooth is being prepared. Once the damaged tooth has been adequately prepared, the dental separator (40) can be removed from the dental arch of the patient. The matrix band is now ready to be placed in position within the interdental area.

### Matrix Bands

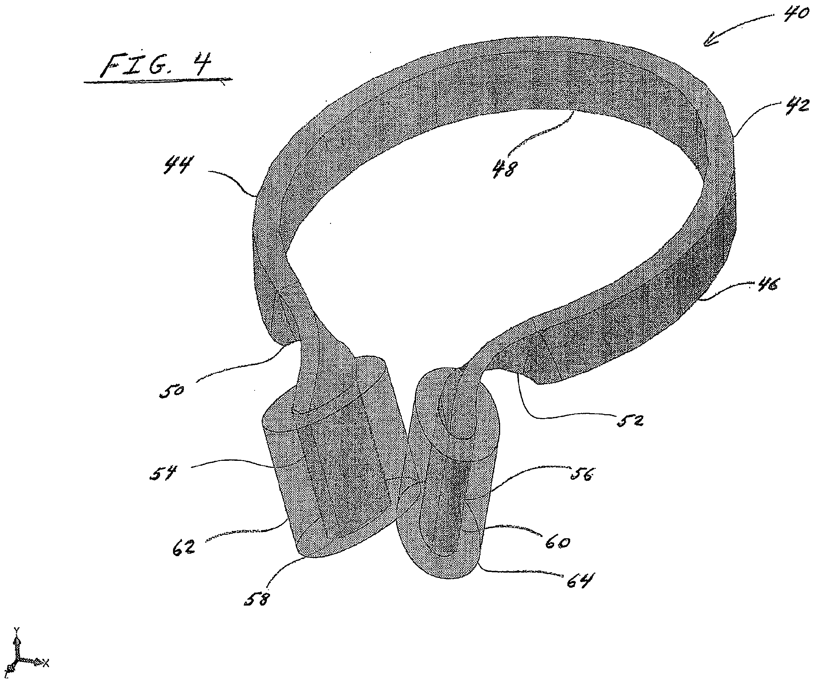

Referring to **FIG. 5****,** one version of the matrix band (70) is shown. The matrix band has a contoured shape for providing an improved form for molding the restoration into a shape that more closely approximates the natural exterior shape of the tooth. The matrix band (70) is shaped so it can more accurately reproduce the natural anatomy of the tooth to be restored.

More particularly, the matrix band (70) comprises a thin strip of strong and flexible material (72) that is curved in the horizontal (longitudinal) direction so it can be wrapped around a tooth. The matrix material (72) includes first and second ends (74, 75) defining a suitable length. The matrix material (72) has interior and exterior surfaces (76, 77) that preferably defines a thickness of less than or equal to 1.5 mil. Because the matrix band (70) has this thickness, it can be more easily placed in position between a tooth to be restored and neighboring tooth.

The matrix band (70) is preferably made of stainless steel or other suitable metal or plastic material or other firm and resilient material. The matrix band (70) is dimensionally stable so the band retains its form after the dental clinician shapes it as needed around the tooth. Because the matrix band (70) is strong and flexible, it can be adjusted by the clinician, as needed, to match the detailed shape of the tooth being restored.

Once the cavity (void) in the damaged tooth has been prepared and the clinician is ready to insert the matrix band (70), he/she will first apply finger-pressure to the flexible matrix (70) and manipulate it to match the approximate dimensions of the tooth being restored. One advantageous feature of the matrix band (70) is that it tends to retain its shape after the dental clinician adjusts and compresses it.

Next, an anatomical wedge may be placed in the gingival margin of the patient's dental arch. The plastic or wooden wedge closes the gingival margin. The dental separator (40) can now be placed in position by inserting the opposing tines (54, 56) in the interproximal plane of the dental arch to further stabilize the matrix band (70). The opposing tines (54, 56) are positioned in such a manner so as to clasp the free ends of the tooth. The tines (54, 56) are designed to engage the tooth and stabilize the matrix band (70) so it does not flare outwardly.

The matrix band (70) is designed so that it will follow the natural profile of a tooth, and the matrix will contact the interproximal surfaces of the involved teeth. The matrix (70) may be made available in a variety of sizes, for example, standard, plus, premolar, mini, and mini-extended sizes, to fit different teeth of patients of different ages. The matrix (70) is particularly suitable for use in making posterior restorations. The matrix (70) can be used by itself or in combination with other matrices. It is recommended that the matrix (70) be used only once for a given patient. That is, the matrix (70) is not meant to be sterilized and used repeatedly. The horizontal curvature of the matrix (70) means that it will contact the interproximal surfaces of the teeth being restored along a substantial length of the matrix (70). As opposed to some traditional matrix bands that form only contact points along the interdental surfaces of the involved teeth, the matrix bands (70) form substantial contact surfaces and create a contact zone along the interdental surfaces of the teeth. The contact surfaces allow the matrix (70) to better follow the natural anatomy of the damaged tooth so that a more natural-looking restoration can be made. Once the matrix band (70) has been stabilized, the damaged tooth can be restored. This is done by introducing the restorative material (for example, amalgam or composite resin) into the cavity (void) formed by the matrix (70).

The opposing tines (54, 56) of the dental separator (40) assist in preserving buccal and lingual embrasures while limiting over-contoured flash during application of a restorative material. The compression sleeves (62, 64) press against the matrix band (70) to prevent leakage of the restorative material on the perimeter of the cavity area in the damaged tooth. Because the restorative material is retained by the matrix band (70), it does not slump or substantially change shape. Thus, the restorative material can be molded to form a restoration that more closely simulates the dimensions and shape of the original tooth. The matrix (70) helps control the shape of the restorative material. The matrix (70) provides a form or shell for the restorative material so that it will more closely simulate the contours and dimensions of the original tooth. By contrast, some traditional matrix bands do not sufficiently control the shape of the restorative material. As a result, the restorative material may shrink or expand from the prepared site in the tooth. Using such traditional matrix bands may result in a restoration that does not have a natural-looking anatomy. Another advantage of the matrix bands (70) is that the dental clinician can use less tension on the matrix and avoid compressing the tooth. Less force to the dental arch is applied and the patient feels more comfortable.

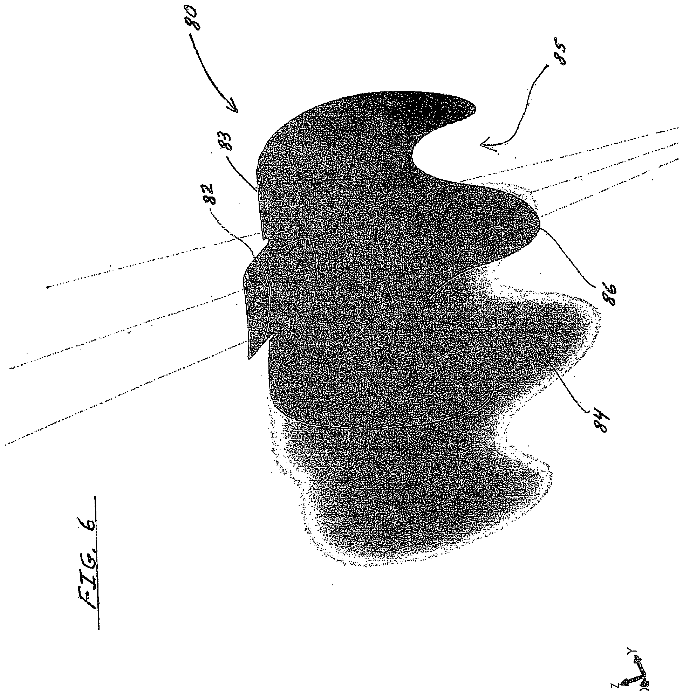

Referring to **FIG. 6****,** another version of the matrix band (80) is shown. The matrix band (80) includes a first protruding segment (82) that extends from the top edge (83). The extending segment (82) helps provide better support and stability to the matrix (80). The matrix band (80) further includes two-cut-out or recessed portions (84, 85) along its lower edge that are engaged with the interproximal areas of the adjacent teeth. Thus, the matrix band has a "bat-wing" structure. The second protruding segment (86) in the lower edge of the matrix band (80), as defined by the cut-out portions (84, 85), can be pressed against the lower portions of a tooth below the gingival line to occlude a deep void or cavity. Once the matrix (80) has been properly positioned, the void or cavity in the damaged tooth can be filled with a restorative material as described above.

Persons skilled in the art will appreciate that various modifications can be made to the illustrated embodiments and description herein without departing from the scope of the present invention.

## Claims

1. A separator device to increase the interproximal space between the adjacent teeth giving the dental clinician improved visibility and working space, wherein the separator device (40) comprises a spring- tensioned yoke (42), which is a unitary, one-piece structure having rectangular cross-sectional shape, including two opposing partial elliptical segments (44, 46) joined by a connector segment (48), wherein
(a) engagement structures (50, 52) are located at each end of the elliptical segments (44, 46), respectively,
(b) opposing tines (54, 56) extend downwardly from the engagement structures (50, 52) at acute angles and are configured so they converge toward one another, the opposing tines (54, 56) do not extend in parallel to each other, and have an interior surface (58) and an exterior surface (60), and
(c) gripping members (62, 64) are attached to the tines (54, 56) as compression sleeves having tubular shapes, whereby the gripping members (62, 64) are made of a soft medical grade elastomeric material providing a cushioned grip for helping in positioning and manipulating the tine (54, 56) on the dental arch of a patient.

## Patentansprüche

1. Trennvorrichtung zum Erhöhen des interproximalen Raums zwischen den benachbarten Zähnen, wodurch Sicht und Arbeitsraum für den Zahnarzt verbessert werden, wobei die Trennvorrichtung (40) einen federgespannten Bügel (42) aufweist, der eine unitäre einstückige Struktur mit rechteckiger Querschnittsform ist, umfassend zwei gegenüberliegende Teilellipsensegmente (44, 46), die durch ein Verbindungssegment (48) verbunden sind, wobei
a) Eingriffsstrukturen (50, 52) jeweils an jedem Ende der Ellipsensegmente (44, 46) angeordnet sind,
b) gegenüberliegende Zinken (54, 56) sich von den Eingriffsstrukturen (50, 52) in spitzen Winkeln abwärts erstrecken und so konfiguriert sind, dass sie hin zueinander zusammenlaufen, wobei die gegenüberliegenden Zinken (54, 56) sich nicht parallel zueinander erstrecken und eine Innenfläche (58) und eine Außenfläche (60) aufweisen, und
c) Greifelemente (62, 64) an den Zinken (54, 56) als Presshülsen mit Röhrenformen angebracht sind, wobei die Greifelemente (62, 64) aus einem weichen elastomeren Material in medizinischer Güteklasse hergestellt sind, das einen gepolsterten Griff bereitstellt, um das Positionieren und Manipulieren der Zinke (54, 56) am Zahnbogen eines Patienten zu erleichtern.

## Revendications

1. Dispositif séparateur permettant d'augmenter l'espace inter-proximal situé entre les dents adjacentes offrant au dentiste une visibilité et un espace de travail améliorés, où le dispositif séparateur (40) comprend un étrier à ressort (42), qui est unitaire, une structure d'un seul tenant ayant une forme rectangulaire en coupe transversale, comprenant deux segments elliptiques partiels (44, 46) s'opposant reliés par un segment de raccord (48), où
(a) des structures d'engagement (50, 52) sont situées à chaque extrémité des segments elliptiques (44, 46), respectivement,
(b) des dents opposées (54, 56) s'étendent vers le bas à partir des structures d'engagement (50, 52) à des angles aigus et sont configurées de manière à converger l'une vers l'autre, les dents opposées (54, 56) ne s'étendent pas parallèlement l'une à l'autre et ont une surface intérieure (58) et une surface extérieure (60), et
(c) des organes de préhension (62, 64) sont fixés aux dents (54, 56) sous forme de manches de compression ayant des formes tubulaires, les organes de préhension (62, 64) étant constitués d'un matériau élastomère souple de qualité médicale fournissant une prise amortie pour aider à placer et à manipuler la dent (54, 56) sur l'arcade dentaire d'un patient.
